# FASCICULE DE BREVET EUROPEEN

(11) **EP 1 853 452 B1**
(45) Date de publication et mention de la délivrance du brevet: **15.07.2009**
(21) Numéro de dépôt: 06709535.6
(22) Date de dépôt: 24.02.2006
(51) Int. Cl.: B60K 6/20

(54) **PROCEDE DE CHANGEMENT DE RAPPORT DE VITESSE**
VERFAHREN ZUM ÄNDERN DES GESCHWINDIGKEITSVERHÄLTNISSES
SPEED RATIO SHIFT METHOD

(30) Priorité: 01.03.2005 FR 0550543
(43) Date de publication de la demande: 14.11.2007
(73) Titulaire: PEUGEOT CITROËN AUTOMOBILES SA, 78140 Vélizy Villacoublay (FR)
(72) Inventeur: LE NEINDRE, Yvan, F-75017 Paris (FR); ROCQ, Gaëtan, F-78125 La Boissiere-Ecole (FR); BOURY, Olivier, F-92000 Nanterre (FR)
(86) Numéro de dépôt international: PCT/FR2006/050165
(87) Numéro de publication internationale: WO 2006/092524

(56) Documents cités:
- EP-A- 0 922 600
- US-A1- 2002 053 475
- US-A1- 2004 204 286
- US-A1- 2004 259 680
- US-B1- 6 319 168

## Description

La présente invention concerne un procédé de changement de rapport de vitesse. L'invention a pour but d'assurer un changement de rapport de vitesse, tout en garantissant notamment une continuité du couple appliqué sur un arbre de roues du véhicule. L'invention a également pour but de limiter le temps pendant lequel le couple appliqué sur l'arbre de roues est nul, lors du changement de rapport. L'invention trouve une application particulièrement avantageuse dans le domaine des véhicules automobiles, mais elle pourrait aussi être mise en oeuvre dans tout type de véhicule terrestre à motorisation hybride.

Dans le présent texte, le terme "démarrage" est utilisé pour désigner la mise en rotation du vilebrequin du moteur thermique. Le terme de "décollage" est utilisé pour désigner la mise en mouvement du véhicule, lorsqu'il passe d'une vitesse nulle à une vitesse non nulle. Le terme "actionnement" est utilisé pour la machine électrique, lorsqu'elle est mise sous tension.

On connaît des véhicules dits hybrides qui combinent l'utilisation d'une énergie thermique et d'une énergie électrique pour réaliser leur traction. Cette combinaison des énergies est réalisée de manière à optimiser le rendement énergétique de tels véhicules. Cette optimisation du rendement énergétique permet au véhicule hybride de polluer et consommer largement moins que les véhicules qui fonctionnent uniquement à l'énergie thermique et dont le rendement n'est pas optimisé. Plusieurs types de dispositifs de transmission de puissance pour véhicule hybride sont connus.

On connaît d'abord des dispositifs de transmission de type hybride comportant un moteur et une paire de machines électriques. L'arbre de roues, l'arbre de moteur et les arbres des deux machines sont reliés entre eux par l'intermédiaire d'un ensemble mécanique. Cet ensemble mécanique est constitué généralement d'au moins deux trains épicycloïdaux. Un tel dispositif de transmission est décrit dans la demande française FR-A-2832357.

Le document US 2004 0 204 286 décrit un procédé de changement de rapport de vitesse selon le préamble de la revendication 1.

On connaît aussi des dispositifs de transmission de type hybride comportant un moteur thermique et une seule machine électrique reliés entre eux par l'intermédiaire d'un embrayage. Un tel dispositif est susceptible de fonctionner dans deux modes différents. Dans un premier mode appelé mode électrique, seule la machine électrique assure la traction du véhicule. Dans un second mode appelé mode hybride, la machine électrique et le moteur thermique assurent ensemble la traction du véhicule.

Dans le mode hybride, la puissance fournie par la machine électrique permet d'ajuster le couple appliqué sur l'arbre de roues, tout en adaptant le couple et le régime du moteur thermique à un point de fonctionnement où sa consommation énergétique est optimisée.

A cet effet, chaque organe du dispositif de transmission : moteur thermique, embrayage, machine électrique et boîte de vitesses, est piloté par un dispositif de contrôle rapproché qui est lui-même commandé par un calculateur spécifique appelé calculateur de supervision. Ce calculateur peut être soit indépendant, soit intégré à l'intérieur d'un autre calculateur, tel que le calculateur moteur. Ce calculateur de supervision exécute des programmes pour synchroniser notamment entre elles des actions des différents organes du dispositif de transmission. Cette synchronisation est réalisée de manière à répondre au mieux à une volonté d'accélération d'un conducteur.

Plus précisément, en fonction de l'accélération souhaitée par l'utilisateur et de conditions de roulage du véhicule, le calculateur de supervision, pilote les différents organes du dispositif, décide du mode de fonctionnement, coordonne les phases transitoires des différents organes, et choisit des points de fonctionnement du moteur et de la machine électrique. Par conditions de roulage, on entend des paramètres du véhicule ainsi que des paramètres extérieurs susceptibles d'influencer la conduite du véhicule. La vitesse et l'accélération du véhicule sont par exemple des paramètres du véhicule, tandis que le degré d'inclinaison d'une pente sur laquelle roule le véhicule ou le taux d'humidité d'une route constituent des paramètres extérieurs.

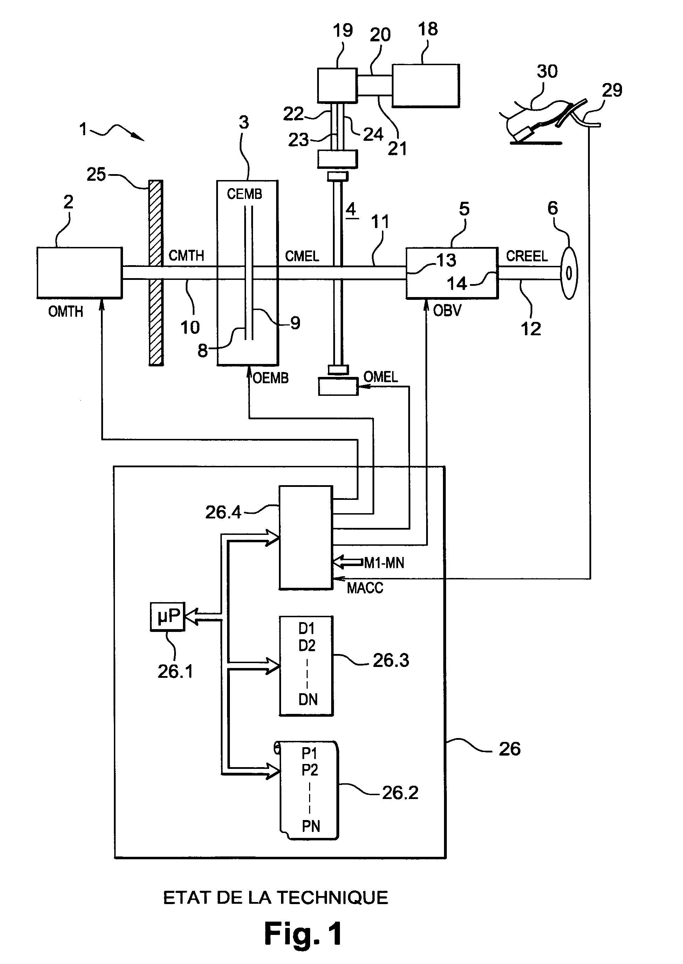

La figure 1 montre une représentation schématique d'un dispositif 1 de transmission selon l'état de la technique. Ce dispositif 1 de transmission comporte un moteur thermique 2, un embrayage 3, une machine électrique 4, une boite 5 de vitesse, et des roues 6 qui forment une chaîne de traction. En variante, la boite 5 est remplacée par un variateur de vitesse.

Plus précisément, l'embrayage 3 comporte un premier disque 8 et un deuxième disque 9 d'embrayage. Le premier disque 8 d'embrayage est relié à un arbre 10 du moteur thermique 2. Et le deuxième disque 9 d'embrayage est relié à un arbre 11 de la machine électrique 4. En outre, l'arbre 11 de la machine électrique 4 et un arbre 12 des roues 6 sont reliés respectivement à une entrée 13 et à une sortie 14 de la boite de vitesses 5.

Comme on l'a vu, le dispositif 1 de transmission est susceptible de fonctionner dans deux modes différents. Dans le mode électrique, l'arbre 12 des roues 6 est entraîné par la machine électrique 4 seulement. L'embrayage 3 est alors ouvert, de manière à ce que l'arbre 10 du moteur thermique 2 et l'arbre 11 de la machine électrique 4 ne soient pas accouplés entre eux. Dans ce mode électrique, la machine électrique 4 se comporte généralement en moteur. Ainsi, dans une réalisation particulière, la machine 4 prélève de l'énergie à un système 18 de stockage, tel qu'une batterie, par l'intermédiaire notamment d'un onduleur 19. La batterie 18 délivre un signal de tension continue. Dans le mode électrique, l'onduleur 19 transforme donc le signal de tension continue observable entre les bornes 20 et 21 de la batterie, en signaux de tension alternatifs qui sont appliqués sur des phases 22-24 de la machine électrique 4.

Dans le mode hybride, l'arbre 12 des roues 6 est entraîné par le moteur thermique 2 et la machine électrique 4. L'embrayage 3 est alors fermé, de manière que l'arbre 10 du moteur thermique 2 et l'arbre 12 des roues 6 soient accouplés entre eux. La machine électrique 4 se comporte en moteur ou en générateur et transmet une puissance à l'arbre 12 des roues 6 pour ajuster le couple observable sur l'arbre 12 des roues 6 au couple de consigne. De la même manière que celle expliquée précédemment, la machine électrique 4 transfère de l'énergie avec la batterie 18.

Dans le mode hybride et le mode électrique, pendant des phases de récupération qui correspondent à un ralentissement du véhicule, la machine électrique 4 se comporte en générateur. Pendant ces phases de récupération, la machine électrique 4 fournit de l'énergie à la batterie 18. L'onduleur 19 transforme alors les signaux de tension alternatifs observables sur les phases 22-24 de la machine électrique 4 en un signal de tension continu qui est appliqué aux bornes 20 et 21 de la batterie 18.

Dans la pratique, la machine électrique 4 est une machine synchrone triphasée. Les machines de ce type présentent l'intérêt d'être compactes et de posséder un bon rendement.

Dans une réalisation particulière, le dispositif 1 de transmission comporte un volant 25 d'inertie. Ce volant d'inertie 25 contribue à assurer une fonction de filtration des ascyclismes pour assurer une continuité dans la transmission du couple du moteur thermique 2 à l'arbre 6 des roues 12.

Par ailleurs, le dispositif 1 de transmission comporte une unité de commande constituée ici par le calculateur 26 de supervision. Ce calculateur 26 de supervision comporte un microprocesseur 26.1, une mémoire programme 26.2, une mémoire de données 26.3, et une interface 26.4 d'entrées-sorties qui sont reliés entre eux par l'intermédiaire d'un bus 31 de communication.

La mémoire de données 26.3 comporte des données D1-DN correspondant notamment aux caractéristiques des différents organes du dispositif 1 de transmission, à savoir le moteur thermique 2, l'embrayage 3, la machine électrique 4 et la boite de vitesses 5. Certaines des données D1-DN correspondent par exemple aux temps de réponse de ces organes 2-5. D'autres données D1-DN correspondent par exemple à des couples maximums et à des couples minimums applicables sur des arbres associés aux organes 2-5.

L'interface 26.4 d'entrées-sorties reçoit des signaux M1-MN observables en sortie de capteurs (non représentés). Ces capteurs permettent de détecter les conditions de roulage du véhicule. Par exemple, des capteurs d'accélération et de vitesse permettent de connaître respectivement l'accélération et la vitesse du véhicule à un instant donné. Un capteur d'inclinaison peut détecter si le véhicule se trouve dans une pente ou pas. En outre, l'interface 26.4 reçoit un signal MACC correspondant à un couple à la roue souhaité par un conducteur. Ce signal MACC est lié au degré d'enfoncement d'une pédale 29 activé par le pied d'un conducteur.

En fonction des données D1-DN, des conditions de roulage, et de l'accélération souhaitée par le conducteur, le microprocesseur 26.1 exécute un des programmes P1-PN qui engendre la mise en fonctionnement du dispositif 1 de transmission dans un mode particulier, et l'ajustement du couple observable sur l'arbre 12 des roues 6. Ainsi, lors de l'exécution d'un des programmes P1-PN, le microprocesseur 26.1 commande l'interface 26.4, de manière que des signaux OMTH, OEMB, OMEL et OBV soient émis respectivement à destination du moteur thermique 2, de l'embrayage 3, de la machine électrique 4 et de la boite de vitesses 5 pour les commander dans un mode particulier.

Dans le cas d'un changement de mode de fonctionnement, certains des programmes P1-PN engendrent des émissions de signaux OMTH, OEMB, OMEL, et OBV assurant la transition d'un mode à un autre.

En outre, les organes 2-5 du dispositif 1 de transmission comportent chacun un système de contrôle interne qui n'est pas représenté. Ces systèmes de contrôle permettent de réguler la valeur des couples observables sur des arbres associés à ces organes 2-5.

Dans un exemple, une demande d'accélération forte est faite par le conducteur alors que le véhicule est en cours de changement de rapport. Le calculateur 26 commande alors les organes 2-5, de manière que le couple observable sur l'arbre 12 des roues 6 soit le plus important possible. En effet, le calculateur 26 commande les organes 2-5, de manière à démarrer le moteur 2 et accoupler son arbre 10 avec l'arbre 11 de la machine électrique 4 le plus rapidement possible, sans attendre le changement de rapport.

Lorsque le moteur thermique 2 est amené à être démarré en même temps qu'un changement de rapport se produit, on parle de démarrage synchronisé du moteur thermique 2. Ce démarrage synchronisé engendre un régime transitoire particulier, pendant lequel il faut à la fois gérer le changement de rapport et le changement de mode du véhicule. En effet, lors de ce régime transitoire, le véhicule passe du mode électrique au mode hybride, tout en changeant de rapport. La gestion du régime transitoire implique un pilotage spécifique des organes 2-5 par le calculateur 26.

Ce régime transitoire est particulièrement critique car il peut se produire jusqu'à 50 fois par heure de roulage, quelle que soit la vitesse du véhicule ou le changement de rapport en cours. Pour que le régime transitoire soit le plus agréable possible pour le conducteur, le temps de changement de rapport et de mise à disposition du moteur thermique 2 doit être minimal. En outre, le niveau d'accélération souhaité par le conducteur doit être maintenu pendant toute la durée du régime transitoire. Le couple appliqué sur l'arbre des roues doit également être le plus continu possible pendant toute la durée du régime transitoire et le confort acoustique doit être maximal. En effet, les emballements du moteur thermique 2 et les bruits de démarrage de ce moteur thermique 2 doivent être évités.

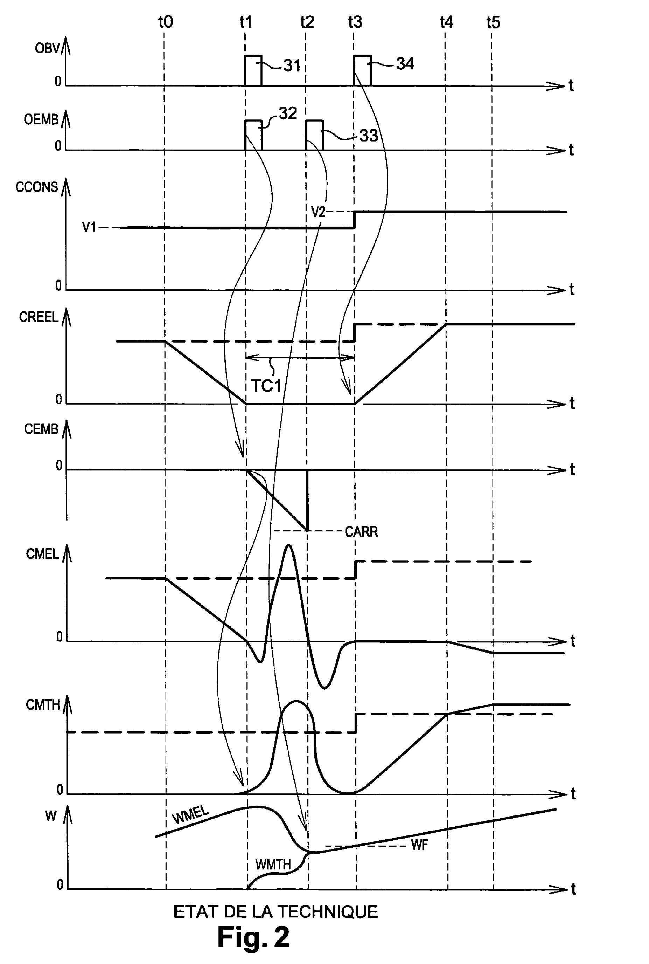

La figure 2 montre des chronogrammes de signaux observables sur les différents organes 2-5 du dispositif 1 de transmission selon l'état de la technique. Ces signaux sont observables lors d'un démarrage synchronisé, c'est-à-dire lorsqu'un démarrage du moteur thermique 2 se produit en même temps qu'un changement de rapport de vitesse.

Plus précisément, la figure 2 montre les signaux de couple CEMB, CMEL et CMTH qui correspondent respectivement au couple observable sur l'embrayage 3, sur l'arbre 11 de la machine électrique 4, et sur l'arbre 10 du moteur thermique 2.

La figure 2 montre également l'évolution dans le temps de signaux de couple CCONS et CREEL correspondant respectivement au couple de consigne à appliquer sur l'arbre 12 des roues 6 et au couple effectivement observable sur cet arbre 12. Le signal de couple CCONS de consigne est élaboré à partir du signal d'accélération MACC et des signaux M1-MN issus des capteurs.

Les signaux OEMB et OBV sont émis par le calculateur 26 de supervision à destination de l'embrayage 3 et de la boite de vitesses 5 pour les commander. Pour plus de simplicité, les signaux OMTH et OMEL qui commandent respectivement le moteur thermique 2 et la machine électrique 4 ne sont pas représentés.

Enfin, la figure 2 montre sur un même chronogramme l'évolution dans le temps de la vitesse de rotation WMEL de la machine électrique 4, et de la vitesse de rotation WMTH du moteur thermique 2.

Sur le graphique représentant les signaux de couple CREEL, CMEL et CMTH, le signal de couple CCONS de consigne est représenté en pointillés.

A l'instant t0, le véhicule a déjà décollé. En effet, ce véhicule est en mouvement et fonctionne dans le mode électrique. La machine électrique 4 possède donc une vitesse de rotation et un couple non nuls, tandis le moteur thermique 2 est arrêté. A l'instant t0, le conducteur fait une demande d'accélération qui requiert un changement de vitesse et le démarrage du moteur thermique 2.

Entre les instants t0 et t1, le dispositif 1 de transmission entre dans une première phase transitoire. Dans cette première phase, le couple CCONS de consigne possède une valeur V1 correspondant notamment à la demande d'accélération du conducteur. Le calculateur 26 commande la machine électrique 4, de manière à ce que son signal de couple CMEL diminue de manière linéaire et soit nul à l'instant t1. Comme le moteur thermique 2 n'est pas accouplé avec l'arbre de la machine, le signal de couple CREEL observable sur l'arbre 12 des roues 6 suit l'évolution du signal de couple CMEL. Cette annulation du signal de couple CREEL observable sur les roues 6 va permettre, comme on va le voir, le dégagement du rapport de vitesse en cours. Par ailleurs, la vitesse de rotation WMEL de la machine électrique 4 a tendance à augmenter. Le moteur thermique 2 est à l'arrêt. Le moteur thermique 2 possède donc un couple CMTH et une vitesse WMTH de rotation nuls. Aucun couple n'est observable sur l'embrayage 3.

Entre les instants t1 et t2, le dispositif 1 de transmission entre dans une deuxième phase transitoire. Dans cette deuxième phase, on fait démarrer le moteur thermique 2 et on met à disposition le couple de ce moteur thermique 2. Mais d'abord, dès que le signal de couple CREEL est nul, à l'instant t1, le calculateur 26 émet un signal 31 à destination de la boite de vitesses 5. Ce signal 31 commande le dégagement du rapport de vitesse en cours. Le signal de couple CCONS de consigne possède toujours la valeur V1. Par ailleurs, un signal 32 est émis par le calculateur 26 de supervision à destination de l'embrayage 3. Ce signal 32 commande cet embrayage 3, de manière à ce que cet embrayage 3 transmette un couple d'arrachement CARR au moteur thermique 2 pour le faire entrer en rotation.

La machine électrique 4 est alors en régulation de régime et compense donc indirectement le couple prélevé par l'embrayage 3. Ainsi, dans cette deuxième phase, le signal de couple CEMB d'embrayage décroît de manière linéaire et atteint, à l'instant t2, une valeur négative égale à la valeur du couple d'arrachement CARR. Un signal de couple CMTH du moteur thermique 2 correspondant au couple de démarrage de ce moteur thermique 2 est alors observable. Le moteur thermique 2 possède alors une vitesse de rotation WMTH qui augmente, mais qui reste inférieure à la vitesse de rotation WMEL de la machine électrique 4. Cette deuxième phase d'accélération a pour but de faire passer au moteur thermique 2 ses premières compressions. Après avoir passé ses premières compressions, le moteur thermique 2 fonctionne à un régime WMTH suffisant pour être autonome.

Entre les instants t2 et t3, le dispositif 1 de transmission entre dans une troisième phase transitoire. Pendant cette troisième phase, le couple de consigne CCONS possède toujours la valeur V1, tandis que le signal couple CREEL observable sur l'arbre 12 des roues 6 est toujours nul. A l'instant t2, lorsque les vitesses de rotation WMEL, WMTH de la machine électrique 4 et du moteur thermique 2 sont globalement égales, un signal 34 est émis à destination de l'embrayage 3 par le calculateur 26. Ce signal 34 commande la fermeture de l'embrayage 3. A partir du moment où l'embrayage 3 est fermé, les vitesses de rotation WMTH, WMEL du moteur thermique 2 et de la machine électrique 4 se confondent. Dans cette troisième phase, les régimes WMEL, WMTH de la machine électrique 4 et du moteur thermique 2 convergent vers une valeur cible WF. En effet, les régimes WMEL et WMTH de la machine électrique 4 augmentent de manière linéaire et atteignent à l'instant t3 le régime cible WF.

Entre les instants t3 et t4, le dispositif 1 de transmission entre dans une quatrième phase transitoire. Dans cette quatrième phase, il se produit une reprise de couple. Le signal de couple CCONS de consigne augmente d'une manière calibrée, comme un échelon par exemple, et atteint dès l'instant t3 une valeur V2. Par ailleurs, à l'instant t3, dès que les vitesses du moteur thermique 2 et de la machine électrique 4 ont atteint le régime cible WF, un signal 35 est émis par le calculateur 26 de supervision à destination de la boite 5 de vitesse. Ce signal 35 commande la boite de vitesses 5, de manière à ce qu'un nouveau rapport de vitesse soit engagé. Dès l'engagement du nouveau rapport, le calculateur 26 commande le moteur thermique 2, de manière à ce que le signal de couple CREEL observable sur l'arbre 12 des roues 6 tende progressivement vers le signal de couple CCONS de consigne. Ainsi, le signal de couple CREEL augmente de manière linéaire et atteint à l'instant t4 le signal de couple CCONS de consigne. Le signal de couple CMEL de la machine électrique 4 est toujours nul. Les vitesses de rotation du moteur WMTH et de la machine WMEL augmentent toutes deux de manière linéaire.

Entre les instants t4 et t5, le dispositif 1 de transmission entre dans une cinquième phase d'accélération. Dans cette cinquième phase, les organes moteur 2 et 4 du dispositif 1 convergent vers leur signal de couple de consigne. Les vitesses de rotation WMEL et WMTH augmentent avec la vitesse du véhicule.

Ainsi, lors de ce démarrage synchronisé, on profite de la durée TC1 de creux pendant laquelle la boite de vitesses 5 est au neutre, pour démarrer le moteur thermique 2. Cette durée TC1 de creux se situe entre les instants t1 et t3. Comme la boite de vitesses 5 est au neutre et que le couple observable sur l'arbre 12 des roues 6 est nul, le démarrage du moteur thermique 2 n'engendre aucune perturbation du couple CREEL observable sur l'arbre 12 des roues 6.

Toutefois, ce procédé de changement de rapport de vitesse engendre notamment deux problèmes majeurs. D'abord, la durée TC1 de creux est rallongée par le temps de démarrage du moteur thermique 2. En effet, une fois que le rapport de vitesse est dégagé en fin de première phase, on ne peut engager le nouveau rapport qu'après que le moteur thermique 2 a été démarré et synchronisé pendant la deuxième et la troisième phase. En outre, cette durée TC1 de creux varie fortement avec la qualité du suivi du signal de couple CMTH. Or cette qualité du suivi du signal de couple CMTH dépend largement des conditions de roulage du véhicule. Ainsi, par exemple, le temps de creux TC1 est plus court lorsque le moteur thermique 2 est chaud, que lorsqu'il est froid.

Par ailleurs, pour engager correctement un rapport de vitesse, les régimes WMTH, WMEL du moteur thermique 2 et de la machine électrique 4 doivent atteindre très précisément le régime WF cible. Et le couple CREEL observable sur l'arbre 12 des roues 6 doit être parfaitement nul. Or il est très difficile de garantir un régime précis de la machine électrique 4 et du moteur thermique 2 lors d'un accouplement rapide de l'arbre 10 du moteur thermique 2 avec l'arbre 11 la machine électrique 4. En effet, il est difficile de réaliser des démarrages synchronisés pour des changements de rapport descendant. En outre, au moment de cet accouplement rapide, l'arbre 11 de la machine électrique 4 présente une telle inertie qu'il est très difficile, voire impossible, de maîtriser les couples appliqués sur les arbres associés aux différents organes 2-5 du dispositif 1. Cette absence de maîtrise de couple engendre une usure prématurée de crabots de la boite de vitesses 5. Par accouplement rapide, on entend un accouplement réalisé entre 0 et 200ms.

En conséquence, le procédé de démarrage selon l'état de la technique ne permet pas de répondre aux critères requis pour les démarrages synchronisés. En effet, avec un tel procédé, les temps de changement de rapport sont longs et dispersés. Par ailleurs, il existe des difficultés d'engagement de rapport liées à des détériorations de la boite de vitesses 5.

L'invention se propose donc notamment de réduire la période de creux et de limiter les contraintes mécaniques imposées aux différents organes du dispositif de transmission, lors d'un démarrage synchronisé.

A cette fin, dans l'invention, l'architecture connue du dispositif de transmission est complétée par un système de démarrage qui est indépendant mécaniquement de la machine électrique. Ce système de démarrage entraîne le moteur thermique sans modifier le couple appliqué sur l'arbre des roues. Dans l'invention, ce n'est donc plus l'embrayage mais le système de démarrage qui transmet le couple d'arrachement au moteur thermique afin de le faire démarrer. Ainsi, ce système de démarrage permet de dissocier les problèmes de démarrage du moteur avec ceux de la chaîne de traction du véhicule et du changement de rapport de vitesse.

Conformément à l'invention, pour passer du mode électrique au mode hybride lors d'un changement de rapport, le régime de la machine électrique tend vers le régime cible pendant que le moteur démarre et se prépare à être accosté par l'embrayage. Ainsi, le changement de rapport peut se produire avant que le moteur thermique ait démarré. Grâce à l'invention, il n'est donc plus nécessaire d'attendre que le moteur thermique soit accouplé avec l'arbre de la machine électrique pour engager un nouveau rapport de vitesse.

Dans un tel procédé, le temps de creux est beaucoup plus court que le temps de creux du procédé selon l'état de la technique. Le temps de synchronisation pendant lequel le régime de la machine électrique tend vers le régime cible est donc beaucoup plus court dans l'invention que dans le procédé selon l'état de la technique. En effet, ce temps de synchronisation est identique au temps de synchronisation observable lors d'un changement de rapport dans le mode électrique. En outre, l'inertie de l'arbre des roues est beaucoup plus faible qu'avec le procédé de l'état de la technique. Cette faible inertie favorise le dégagement et l'engagement des rapports de vitesse. On limite ainsi l'usure et les bruits de boite de vitesses.

Dans une mise en oeuvre du procédé selon l'invention, au moment où le moteur thermique est démarré, on teste si a durée qui sépare ce démarrage du prochain changement de rapport est suffisante pour que l'accouplement de l'arbre du moteur thermique avec l'arbre de la machine électrique soit réalisé jusqu'au bout. Si cette durée est suffisante, alors on autorise l'accouplement. En revanche, si la durée est insuffisante, alors on autorise le démarrage du moteur, mais on inhibe l'accouplement, tout en autorisant le changement de rapport de vitesse du véhicule.

Par ailleurs, l'introduction du système de démarrage entraîne une simplification du pilotage de l'embrayage et de la machine électrique lors d'un démarrage synchronisé. La nouvelle architecture permet ainsi d'éviter la synchronisation entre les actions de l'embrayage et de la machine électrique.

L'invention concerne donc un procédé de changement de rapport de vitesse d'un véhicule mettant en oeuvre un dispositif de transmission de puissance comportant un moteur thermique arrêté et une machine électrique, cette machine électrique étant reliée d'une part au moteur thermique par un embrayage ouvert et d'autre part à un arbre de roues par une boite de vitesses,
**caractérisé en ce que**, pour démarrer le moteur thermique lors d'un changement de rapport de vitesse,
- on démarre le moteur thermique à l'aide d'un système de démarrage indépendant mécaniquement de la machine électrique.

L'invention sera mieux comprise à la lecture de la description qui suit et à l'examen des figures qui l'accompagnent. Ces figures sont données à titre illustratif mais nullement limitatif de l'invention. Ces figures montrent :
- Figure 1 (déjà décrite) : une représentation schématique d'un dispositif de transmission de puissance selon l'état de la technique ;
- Figure 2 (déjà décrite) : des chronogrammes représentant l'évolution dans le temps de signaux observables sur des organes d'un dispositif de transmission de l'état de la technique, lors d'un démarrage synchronisé ;
- Figure 3 : une représentation schématique d'un dispositif de transmission de puissance selon l'invention ;
- Figure 4 : des chronogrammes représentant l'évolution dans le temps de signaux observables sur des organes d'un dispositif de transmission selon l'invention, lors d'un démarrage synchronisé ;
- Figure 5 : un diagramme d'étapes du procédé selon l'invention mises en oeuvre en fonction de la durée qui sépare le démarrage du moteur thermique d'un changement de rapport de vitesse ;
- Figure 6 : des chronogrammes représentant l'évolution dans le temps de signaux observables sur des organes d'un dispositif de transmission selon l'invention, lorsque la durée qui sépare un démarrage du moteur thermique d'un changement de vitesse n'est pas suffisante pour autoriser un accouplement entre le moteur thermique et la machine électrique.

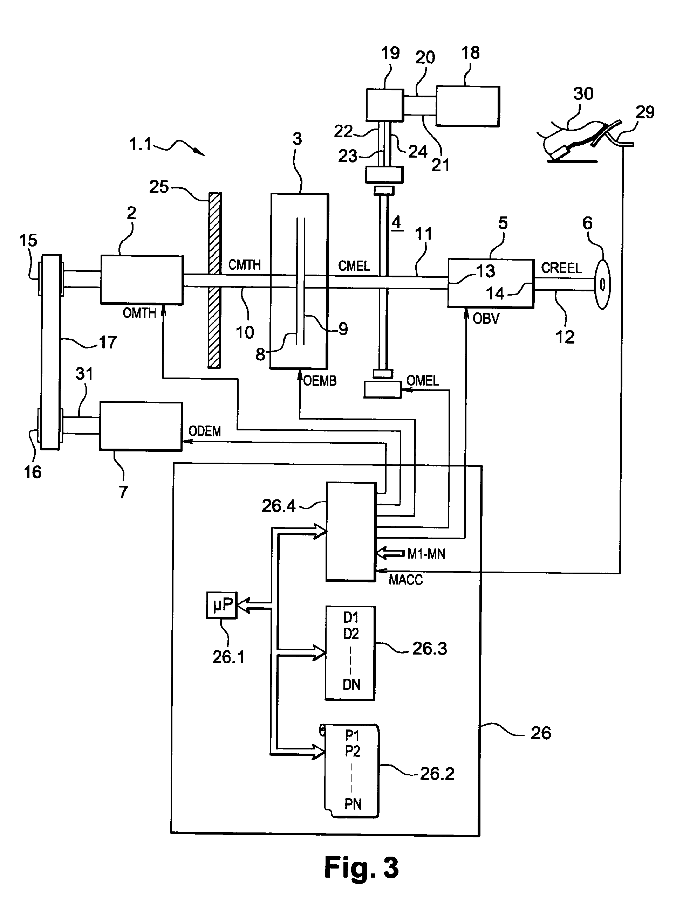

La figure 3 montre une représentation schématique d'un dispositif 1.1 de transmission selon l'invention. Comme le dispositif 1 de transmission selon l'état de la technique, ce dispositif 1.1 de transmission comporte un moteur thermique 2, un embrayage 3, une machine électrique 4, une boite de vitesses 5 et des roues 6. Les quatre organes 2-5 et les roues 6 du véhicule forment une chaîne de traction, et sont agencés de la même manière que dans le dispositif 1 de transmission selon l'état de technique. En outre, conformément à l'invention, le dispositif 1.1 de transmission comporte un système de démarrage 7 relié au moteur thermique 2.

Le système de démarrage 7 ne participe donc jamais à la traction.

Il est de ce fait dimensionné en conséquence pour générer une puissance juste suffisante pour faire démarrer le moteur thermique 2, puissance qui est sensiblement inférieure à celle de la machine électrique 4 et qui ne nécessite pas de tension d'alimentation élevée.

Ce système de démarrage 7 est relié au moteur thermique 2 et l'entraîne en rotation afin de le faire démarrer. Le système de démarrage 7 est indépendant mécaniquement de la machine électrique 4. En effet, le système de démarrage 7 démarre le moteur thermique 2 sans prélever de puissance à cette chaîne de traction. En conséquence, le démarrage du moteur thermique 2 n'a plus d'impact sur la continuité du couple appliqué sur l'arbre 12 des roues 6.

Dans une réalisation particulière, le moteur thermique 2 comporte une première poulie 15 qui est accrochée à une extrémité de son arbre 10. Et le système de démarrage 7 comporte une deuxième poulie 16 qui est accrochée à une extrémité de son arbre 31. Une courroie 17 passe par les gorges de ces deux poulies 15 et 16, de manière à relier le système de démarrage 7 au moteur thermique 2.

Dans l'invention, la machine électrique 4 est toujours reliée à un dispositif 18 de stockage, tel qu'une batterie. En variante, le système 18 de stockage est une machine à inertie, ou un supercondensateur.

Dans une réalisation particulière, le dispositif 1.1 de transmission peut aussi comporter le volant 25 d'inertie. Ce volant 25 d'inertie est relié à l'arbre 10 du moteur thermique 2, entre ce moteur thermique 2 et l'embrayage 3.

Par ailleurs, le dispositif 1.1 de transmission selon l'invention comporte le calculateur 26 de supervision. Lors de l'exécution d'un des programmes P1-PN, le microprocesseur 26.1 commande l'interface 26.4, de manière à ce que, outre les signaux OMTH, OEMB, OMEL, OBV, un signal ODEM soit émis à destination du système de démarrage 7 pour le commander. Les signaux OMTH et OMEL commandent respectivement le moteur thermique 2 et la machine électrique 4, de manière à ce que ce moteur thermique 2 fonctionne toujours à son point de fonctionnement optimal où, pour une puissance donnée, sa consommation est minimale.

Dans le cas d'un changement de mode de fonctionnement, certains des programmes P1-PN engendrent des émissions de signaux OMTH, OEMB, OMEL, OBV et ODEM permettant la transition d'un mode à un autre.

Le système de démarrage 7 comporte aussi un système de contrôle interne qui n'est pas représenté. Ce système de contrôle permet de réguler la valeur du couple d'arrachement que ce système de démarrage 7 doit appliquer à l'arbre 10 du moteur thermique 2. Ce couple d'arrachement est en général constant.

Dans l'invention, l'embrayage 3 est un embrayage sec ou humide.

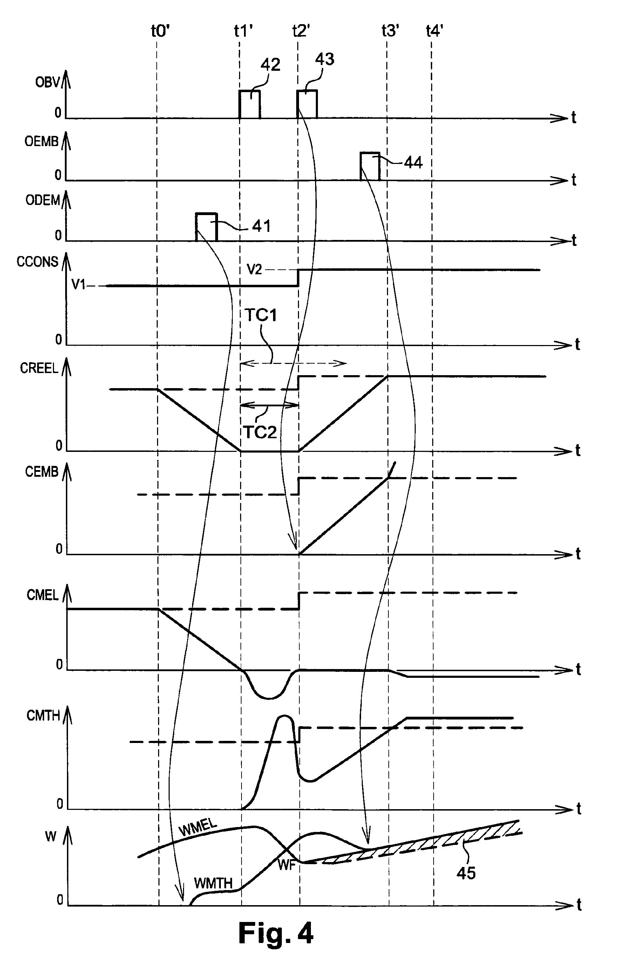

La figure 4 montre des chronogrammes des signaux observables sur les différents organes 2-5 du dispositif 1.1 de transmission selon l'invention. Comme pour la figure 2, ces signaux sont observables lors d'un démarrage synchronisé du moteur thermique 2. Le signal de consigne CCONS est représenté en pointillés sur les chronogrammes des signaux de couple CREEL, CEMB, CMEL et CMTH.

Pour plus de simplicité, seuls les signaux OBV, OEMB et ODEM qui jouent un rôle prépondérant lors du démarrage synchronisé sont représentés.

A l'instant t0', le véhicule a déjà décollé. En effet, ce véhicule est en mouvement et fonctionne dans le mode électrique dans lequel la machine électrique 4 a déjà été actionnée. La machine électrique 4 possède alors une vitesse de rotation WMEL et un couple CMEL non nuls, tandis le moteur thermique 2 est arrêté. A l'instant t0', des conditions de roulage requièrent un changement de rapport en même temps que, ou avant, le démarrage du moteur thermique 2.

Entre les instants t0' et t1', le dispositif 1.1 de transmission entre dans une première phase transitoire. Dans cette première phase, le couple CCONS de consigne possède une valeur V1 correspondant notamment à la demande d'accélération du conducteur. Le signal de couple CMEL de la machine électrique 4 qui est égal à V1 à l'instant t0' décroît de manière linéaire et calibrable, si bien qu'à l'instant t1', ce signal CMEL est nul. Comme l'arbre 10 du moteur thermique 2 n'est pas accouplé avec l'arbre 11 de la machine électrique 4, le signal de couple CREEL suit exactement l'évolution du signal de couple CMEL de la machine électrique 4. Par ailleurs, pendant dans cette première phase, un signal 41 est émis par le calculateur 26 à destination du système de démarrage 7. Ce signal 41 commande le système de démarrage 7, de manière que ce système de démarrage 7 transmette le couple d'arrachement ou couple de démarrage au moteur thermique 2 et l'entraîne en rotation. Une fois que le moteur thermique 2 a passé des premières compressions, entre 3 et 5 dans un exemple, un signal est émis par le calculateur 26 à destination du système de démarrage 7 de manière à couper ce système de démarrage 7, c'est à dire l'arrêter. La vitesse de rotation WMTH du moteur thermique 2 a alors tendance à augmenter mais reste inférieure à la vitesse de rotation WMEL de la machine électrique 4. Le couple CMTH du moteur est nul. Aucun couple n'est observable sur l'embrayage 3, puisqu'il ne participe plus au démarrage du moteur thermique 2.

Entre les instants t1' et t2', le dispositif 1.1 de transmission entre dans une deuxième phase transitoire. Dans cette deuxième phase, le signal de couple CCONS de consigne possède toujours la valeur V1. A l'instant t1', dès que le signal de couple CREEL est nul, un signal 42 est émis par le calculateur 26 à destination de la boite de vitesses 5. Ce signal 42 commande la boite de vitesses 5, de manière que le rapport de vitesse en cours soit désengagé. De préférence, le rapport de vitesse est désengagé lorsque, comme ici, le signal de couple CREEL est nul. En variante, pour un désengagement de rapport sous couple, le rapport de vitesse peut être désengagé lorsque le signal de couple CREEL n'est pas nul, en pilotant les organes 2-5 de manière particulière. Le signal de couple CMEL de la machine électrique 4 entre dans une oscillation négative. Un signal de couple CMTH du moteur thermique 2 correspondant au couple de démarrage de ce moteur thermique 2 est observable. La machine électrique 4 est commandée, de manière que sa vitesse de rotation WMEL converge vers le régime cible WF. La vitesse de rotation WMTH du moteur thermique 2 augmente, si bien qu'à l'instant t2', elle est supérieure à la vitesse de rotation WMEL de la machine électrique 4. A la fin de cette deuxième phase, le moteur thermique 2 fonctionne à un régime WMTH suffisant pour être autonome.

Entre les instants t2' et t3', le dispositif 1.1 de transmission entre dans une troisième phase transitoire qui est une phase de reprise de couple. En effet, dans cette troisième phase, le couple de consigne CCONS augmente alors que l'arbre 10 du moteur thermique 2 et l'arbre 11 de la machine électrique commencent à s'accoupler.

Plus précisément, pendant cette troisième phase, le signal de couple CCONS de consigne augmente de manière calibrable, comme un échelon et atteint, dès l'instant t2', une valeur V2. A l'instant t2', dès que la vitesse de rotation WMEL de la machine électrique 4 atteint le régime cible WF, un signal 43 est émis par le calculateur 26 à destination de la boite de vitesses 5. Ce signal 43 commande la boite de vitesses 5, de manière à ce qu'un nouveau rapport de vitesse soit engagé. L'embrayage 3 est alors commandé de manière à ce que ses disques 8 et 9 se mettent en glissement l'un par rapport à l'autre. Le signal de couple CEMB observable sur l'embrayage 3 augmente alors de manière linéaire. Et le signal de couple CMTH du moteur thermique 2 qui n'était pas nul augmente lui aussi de manière globalement linéaire. Ainsi, dès l'engagement du rapport suivant, il se produit une reprise de couple. Le signal de couple CREEL augmente alors pour atteindre le signal de couple CCONS consigne à l'instant t3'. La vitesse de rotation WMTH du moteur thermique 2 tend vers la vitesse de rotation WMEL de la machine électrique 4. Lorsque ces deux vitesses de rotation WMEL et WMTH sont égales, un signal 44 est émis à destination de l'embrayage. Ce signal 44 commande la fermeture de l'embrayage 3. A partir de l'instant où l'embrayage 3 est fermé, les vitesses de rotation WMTH, MEL du moteur thermique 2 et de la machine électrique 4 se confondent.

Entre les instants t3' et t4', le dispositif 1.1 de transmission entre dans une quatrième phase transitoire. Dans cette quatrième phase, les organes moteur 2 et 4 du dispositif 1.1 convergent chacun vers une valeur de consigne de couple optimale au regard d'une consommation du moteur thermique 2, s'ils ne l'ont pas déjà atteinte. Ces signaux de consignes sont élaborés par le calculateur 26, de manière à ce que le moteur thermique 2 fonctionne à son point de fonctionnement optimal. Plus précisément, le signal de couple CCONS possède toujours la valeur V2. Le signal de couple CMTH du moteur thermique 2 augmente alors légèrement. Tandis que le signal de couple CMEL de la machine 4 diminue symétriquement par rapport au signal de couple CMTH. Ainsi, le signal de couple CREEL est toujours égal au signal CCONS de consigne. Les vitesses de rotation du moteur thermique WMTH et de la machine électrique WMEL augmentent, grâce à l'apport de CMTH.

Ainsi, lors de l'engagement du nouveau rapport, l'embrayage 3 est ouvert et demeure ouvert pendant une durée prédéterminée qui s'étend entre t0' et t2'. Cette durée peut être fonction de la durée nécessaire au changement de vitesse et / ou de la durée nécessaire au moteur thermique 2 pour devenir autonome. En variante, l'embrayage 3 pourrait être fermé lors du démarrage du moteur thermique 2, les organes 2-5 étant alors pilotés de manière particulière.

Le moteur thermique 2 est ici démarré pendant l'annulation du couple CREEL observable sur l'arbre 12 des roues 6. En variante, le moteur thermique 2 est démarré avant, ou après, l'annulation de couple CREEL. En effet, le signal 41 peut être émis avant, pendant ou bien après que le signal de couple CREEL commence à diminuer.

Un temps TC2 de creux pendant lequel un couple nul est observable sur l'arbre 12 des roues 6 est plus court que le temps TC1 de creux représenté en pointillés et observable avec le procédé de l'état de la technique. En conséquence, le changement de rapport de vitesse avec le procédé selon l'invention est plus sûr pour le conducteur qu'avec le procédé selon l'état de la technique. En effet, le temps pendant lequel le couple CCONS de consigne n'est pas respecté est beaucoup plus court avec le procédé selon l'invention qu'avec le procédé selon l'état de la technique.

En outre, bien que les deux machines 4 électriques soient dimensionnées de la même manière, pour un même couple CCONS de consigne, la vitesse de rotation de la machine électrique 4 du dispositif 1.1 selon l'invention, est supérieure à la vitesse de rotation de la machine électrique 4 du dispositif 1 selon l'état de la technique. Le dispositif 1.1 selon l'invention permet ainsi de gagner en accélération pendant le démarrage synchronisé par rapport au dispositif 1 selon l'état de la technique. Ce gain en accélération est représenté sur le chronogramme des vitesses par des hachures 45.

Par ailleurs, dans l'invention, lors de la transmission du couple d'arrachement par le système de démarrage 7, les actions appliquées sur l'embrayage 3 par le moteur thermique 2 et la machine électrique 4 le sont indépendamment l'une de l'autre. Une action par la machine électrique 4 est celle d'entraîner le véhicule. Une action par le moteur thermique 2 est une action par le système de démarrage 7 qui est celle de démarrer le moteur thermique 2.

En outre, avec le procédé selon l'invention, le démarrage du moteur thermique 2 est plus robuste qu'avec un procédé selon l'état de la technique. En effet, le système de démarrage 7 démarre le moteur thermique 2 avec un couple globalement constant, quelles que soient les conditions de roulage du véhicule.

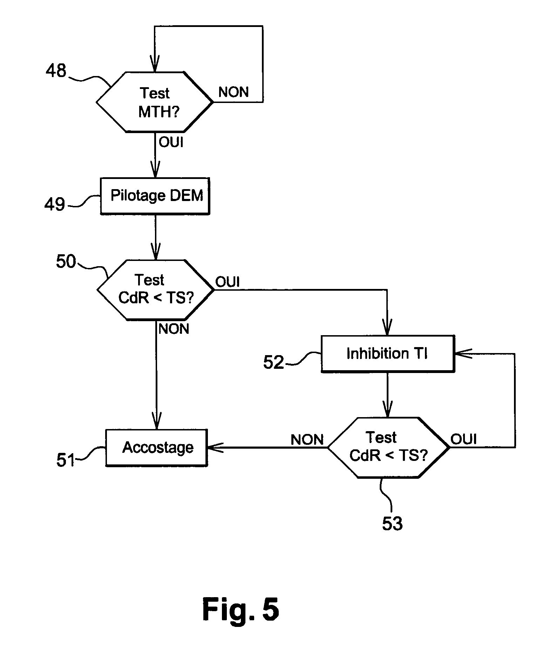

La figure 5 montre des étapes d'une variante du procédé de changement de vitesse selon l'invention. La mise en oeuvre de ces étapes dépend de la durée qui sépare le démarrage du moteur thermique 2 d'un changement de rapport.

Plus précisément, dans une première étape 48, on détecte si une demande de démarrage du moteur thermique 2 a été faite. Cette demande de démarrage est liée aux conditions de roulage du véhicule. En effet, cette demande de démarrage dépend notamment des signaux M1-MN et MACC que le calculateur 26 reçoit. Si aucune demande de démarrage n'est faite, alors on retourne à l'étape 48. En revanche, si une demande de démarrage est faite, alors on passe à une deuxième étape 49.

Dans cette deuxième étape 49, le calculateur 26 commande la mise en marche du système de démarrage 7 qui fournit le couple d'arrachement au moteur thermique 2 pour le démarrer. Après que le moteur thermique 2 a été démarré, on passe à une troisième étape 50.

Dans cette troisième étape 50, on teste si une durée qui sépare le démarrage du moteur thermique 2 d'un changement de rapport est assez longue pour autoriser un accouplement entre l'arbre 10 du moteur thermique 2 et l'arbre 11 de la machine électrique 4. En effet, le calculateur 26 gère notamment deux processus différents qui s'exécutent en parallèle: un premier processus lié au démarrage du moteur thermique 2 et un deuxième processus lié au changement de mode du véhicule. Cette troisième étape 50 permet ainsi de gérer l'accouplement entre le moteur 2 et la machine 4 en fonction du moment où le changement de vitesse se produit.

Plus précisément, on teste si la durée CdR qui sépare un ordre antérieur de démarrage du moteur thermique 2 d'un ordre postérieur de changement de rapport de vitesse est inférieure à une durée TS seuil. La durée TS seuil est ajustable et correspond globalement au temps nécessaire au moteur thermique 2 pour qu'il démarre et que son arbre 10 s'accouple avec l'arbre 11 de la machine électrique 4. Dans un exemple, cette durée TS seuil est égale à 350ms et est légèrement supérieure à la durée moyenne nécessaire à un accouplement entre les arbres du moteur thermique 2 et de la machine électrique 4.

Si la durée CdR qui sépare un démarrage du moteur thermique 2 d'un changement de vitesse est supérieure à la durée TS seuil, alors on passe à une étape 51. Dans cette étape 51, on autorise l'accouplement entre l'arbre du moteur 2 et l'arbre de la machine 4.

En revanche, si la durée qui sépare le démarrage du moteur 2 du changement de rapport est inférieure à la durée TS seuil alors on passe à une étape 52 d'inhibition. Dans cette étape 52 d'inhibition, on retarde l'accouplement entre les arbres du moteur 2 et de la machine 4 pendant une durée TI d'inhibition. Pendant cette durée TI d'inhibition, les disques 8 et 9 d'embrayage ne sont même pas autorisés à entrer en glissement l'un par rapport à l'autre. Pendant la durée TI d'inhibition, le changement de rapport se produit. La durée TI d'inhibition est donc calculée, de manière à ce que le changement de rapport de vitesse ait le temps d'être effectué. Dans un exemple la durée TI d'inhibition vaut 450ms. La durée d'inhibition est elle aussi ajustable et généralement supérieure à la durée TS seuil. Après l'étape 52 d'inhibition, on passe à une nouvelle étape 53.

Dans cette étape 53, on teste si la durée qui sépare la fin de l'étape d'inhibition d'un changement de rapport à venir est supérieure ou inférieure à la durée TS seuil. Si la durée qui sépare la fin de l'étape d'inhibition du changement de rapport à venir est inférieure à la durée TS seuil, alors on réitère l'étape 52. Dans le cas contraire, on passe à l'étape 51. L'étape 53 peut être mise en oeuvre dans un dispositif 1.1 de transmission où des changements de rapport très rapprochés sont autorisés.

En variante, après l'étape 52, on passe directement à l'étape 51.

Dans le procédé selon l'invention, le moteur thermique 2 est donc démarré dès que son utilisation est requise. Toutefois, on inhibe son accouplement avec l'arbre 11 de la machine électrique 4 si la durée qui sépare son démarrage d'un changement de rapport est inférieure à la durée seuil TS. Le procédé selon l'invention permet ainsi d'éviter des accouplements avortés dus à des changements de rapport trop proches dans le temps du démarrage du moteur thermique 2.

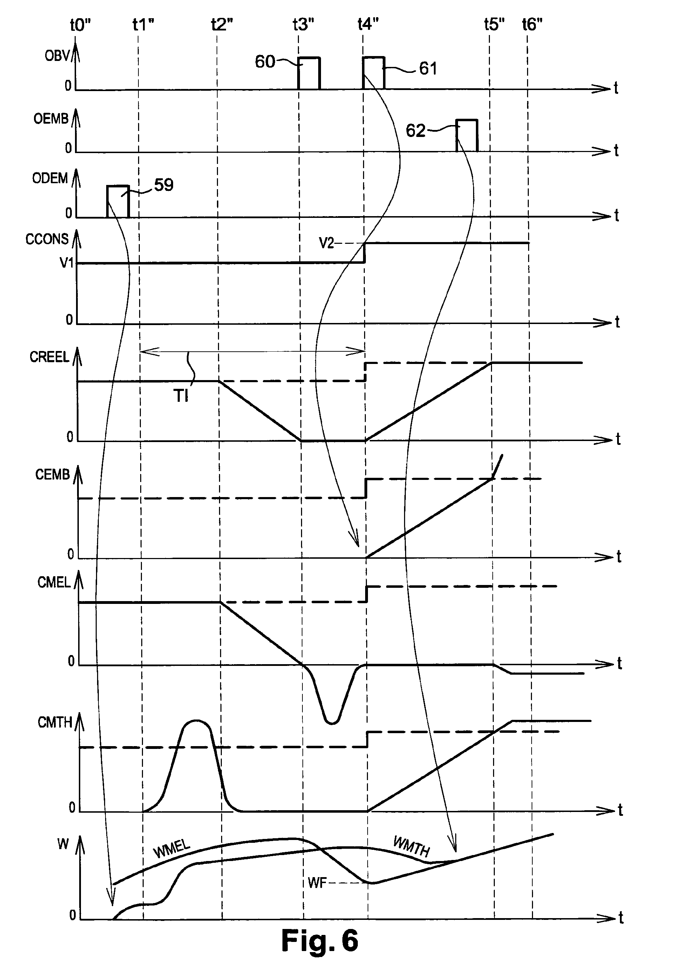

La figure 6 montre des chronogrammes des signaux observables sur les différents organes 2-5 du dispositif 1.1 de transmission selon l'invention lorsque la durée qui sépare un démarrage du moteur thermique 2 d'un changement de rapport de vitesse est inférieure à la durée seuil TS. Le signal de consigne CCONS est là encore représenté en pointillés sur les diagrammes des signaux de couple CREEL, CEMB, CMEL et CMTH.

Pour plus de simplicité, seuls les signaux OEMB, OBV et ODEM qui jouent un rôle prépondérant sont représentés.

A l'instant t0", le véhicule est en mouvement et fonctionne en mode électrique. La machine électrique 4 possède alors une vitesse de rotation WMEL et un couple CMEL non nuls, tandis que le moteur thermique 2 est arrêté. A l'instant t0", le calculateur 26 détecte le besoin de démarrer le moteur thermique 2.

Entre les instants t0" et t1", le dispositif 1.1 de transmission entre dans une première phase transitoire. Pendant cette première phase, le signal de couple CCONS de consigne possède une valeur V1 correspondant notamment à la demande d'accélération du conducteur. Un peu avant l'instant t1", un signal 59 est émis par le calculateur 26 à destination du système de démarrage 7. Ce signal 59 commande le système de démarrage 7, de manière à ce que ce système de démarrage 7 fournisse le couple d'arrachement au moteur thermique 2 pour le démarrer. La vitesse de rotation WMTH du moteur thermique 2 a alors tendance à augmenter mais reste inférieure à la vitesse de rotation WMEL de la machine électrique 4. Le signal de couple CMEL de la machine électrique 4 est égal au signal de couple CCONS de consigne. Ainsi, le signal de couple CREEL se confond avec le signal de couple CCONS attendu sur l'arbre des roues 12. Aucun couple n'est observable sur l'embrayage 3 puisqu'il ne participe pas au démarrage du moteur thermique 2.

Entre les instants t1" et t2", le dispositif 1.1 de transmission entre dans une deuxième phase transitoire. Cette deuxième phase est une phase de détection et de prise de décision. En effet, à l'instant t1", le calculateur 26 détecte que la durée entre le démarrage du moteur thermique 2 et un changement de rapport de vitesse est inférieure à la durée seuil TS. Le calculateur 26 va donc, comme on va le voir, commander les organes 2-5, de manière à inhiber l'accouplement entre les arbres du moteur thermique 2 et de la machine électrique 4. Pendant la deuxième phase transitoire, le signal de couple CMEL de la machine électrique 4 possède la même valeur V1 que le signal de couple CCONS de consigne. Comme l'arbre 10 du moteur thermique 2 n'est toujours pas accouplé avec l'arbre 11 de la machine électrique 4, le signal de couple CREEL se confond avec le signal de couple CCONS de consigne. Un signal de couple CMTH correspondant au couple de démarrage du moteur thermique 2 est observable sur l'arbre 10 du moteur thermique 2. La vitesse de rotation WMTH du moteur thermique 2 augmente mais reste inférieure à la vitesse de rotation WMEL de la machine électrique 4.

Entre les instants t2" et t3", le dispositif 1.1 entre dans une troisième phase transitoire. Dans cette troisième phase, le calculateur 26 commande la machine électrique 4, de manière à ce que le couple CMEL de cette machine 4 s'annule. Ainsi, le signal de couple CMEL de la machine électrique 4 diminue de manière linéaire, si bien qu'il est nul à l'instant t3". Comme l'arbre du moteur thermique 2 n'est toujours pas accouplé avec l'arbre 11 de la machine électrique 4, le signal de couple CREEL suit l'évolution du signal de couple CMEL de la machine électrique 4. L'annulation du signal de couple CREEL observable sur l'arbre 12 des roues 6 va permettre, comme on va le voir, le dégagement du rapport de vitesse en cours. Dès la troisième phase, le moteur thermique 2 est démarré et prêt à être accosté. Le signal de couple CCONS de consigne vaut toujours V1.

Entre les instants t3" et t4", le dispositif 1.1 selon l'invention entre dans une quatrième phase transitoire. Dans cette quatrième phase, la valeur du signal de couple CCONS de consigne est toujours égale à V1. A l'instant t3", dès que le signal de couple CREEL observable sur l'arbre 12 est nul, un signal 60 est émis à destination de la boite de vitesse pour commander le désengagement du rapport en cours. Le signal de couple CMEL de la machine électrique 4 entre dans une oscillation négative. La vitesse de rotation WMEL de la machine électrique 4 converge vers un régime cible WF pour autoriser, comme on va le voir, l'engagement du nouveau rapport de vitesse.

Entre les instants t4" et t5", le dispositif 1.1 entre dans une cinquième phase transitoire. Dans cette cinquième phase, le signal de couple CCONS augmente, à la manière d'un échelon, et atteint une valeur V2, à l'instant t4". A l'instant t4", dès que la machine électrique 4 atteint le régime cible WF, un signal 61 est émis par le calculateur 26 à destination de la boite de vitesses 5. Ce signal 61 commande la boite de vitesses, de manière à ce qu'un nouveau rapport de vitesse soit engagé. L'inhibition de l'accouplement tombe dès que le nouveau rapport de vitesse est engagé. Ainsi, dès l'instant t4", les disques 8 et 9 d'embrayage entrent en glissement l'un par rapport à l'autre. Le signal de couple CMTH du moteur thermique 2 et le signal de couple CEMB de l'embrayage 3 augmentent alors tous deux. En conséquence, le signal de couple CREEL augmente lui aussi et atteint à l'instant t5" le signal de coupe CCONS de consigne. La vitesse de rotation WMTH du moteur thermique 2 tend vers la vitesse de rotation WMEL de la machine électrique 4. Lorsque ces deux vitesses de rotation WMEL et WMTH sont égales, un signal 62 est émis à destination de l'embrayage 3. Ce signal 62 commande la fermeture de l'embrayage 3. A partir de l'instant où l'embrayage 3 se ferme, les vitesses de rotation WMTH, MEL du moteur thermique 2 et de la machine électrique 4 se confondent.

Entre les instants t5" et t6", le dispositif 1 de transmission entre dans une sixième phase d'accélération. Dans cette sixième phase, comme on l'a déjà vu, les organes moteur 2 et 4 du dispositif 1.1 convergent vers leur valeur de consigne de couple optimale, s'ils ne l'ont pas déjà atteinte. Ces signaux de consignes sont élaborés, de manière à ce que le moteur thermique 2 fonctionne à son point de fonctionnement optimal. Plus précisément, le signal de couple CCONS possède toujours la valeur V2. Le signal de couple CMTH du moteur thermique 2 augmente alors légèrement. Tandis que le signal de couple CMEL de la machine 4 diminue dans un exemple symétriquement par rapport au signal de couple CMTH. Ainsi, le signal de couple CREEL est toujours égal au signal CCONS de consigne. Les vitesses de rotation du moteur thermique WMTH et de la machine électrique WMEL augmentent de manière linéaire, avec la vitesse du véhicule.

Ainsi, que le démarrage du moteur thermique 2 se produise avant, pendant, ou après un changement de rapport de vitesse, le système de démarrage 7 permet toujours de réduire le temps de ce changement de rapport. En effet, la synchronisation de l'arbre des roues sur le régime WF cible se fait toujours par la machine électrique 4 qui n'est pas perturbée par l'embrayage 3. En outre, dans l'invention, comme l'inertie de l'arbre 11 de la machine électrique 4 est maîtrisée, le temps d'engagement et de dégagement d'un rapport de vitesse est globalement constant, quelles que soient les conditions de roulage.

En variante, le procédé selon l'invention est mis en oeuvre alors que la machine électrique 4 est à l'arrêt, lors d'un décollage du véhicule.

## Revendications

1. Procédé de changement de rapport de vitesse d'un véhicule mettant en oeuvre un dispositif (1.1) de transmission de puissance comportant un moteur thermique (2) et une machine électrique (4), cette machine électrique (4) étant reliée d'une part au moteur thermique (2) par un embrayage (3) et d'autre part à un arbre (12) de roues (6) par une boite de vitesses (5), dans lequel, le moteur thermique (2) étant à l'arrêt, pour démarrer le moteur thermique (2) lors d'un changement de rapport de vitesse, et
- alors que le véhicule est entraîné par la seule machine électrique (4),
- on démarre le moteur thermique (2) à l'aide d'un système de démarrage (7) relié à ce moteur thermique (2) et indépendant mécaniquement de la machine électrique (4),
**caractérisé en ce que :**
- le système de démarrage (7) dissocie le démarrage du moteur thermique (2) du changement de vitesse de ce véhicule, le changement de vitesse se produisant avant l'accouplement par l'embrayage (3) entre le moteur thermique (2) et la machine électrique (4).

2. Procédé selon la revendication 1, **caractérisé en ce que :**
- on annule un couple (CMEL) observable sur l'arbre (11) de la machine électrique (4),
- on fait converger la vitesse de rotation (WMEL) de la machine électrique (4) vers un régime (WF) cible avant l'engagement du nouveau rapport de vitesse, et
- on effectue l'engagement d'un nouveau rapport de vitesse.

3. Procédé selon la revendication 2, **caractérisé en ce que :**
- l'embrayage (3) qui était jusqu'alors ouvert demeure ouvert durant l'engagement du nouveau rapport, et
- l'embrayage (3) est fermé après cet engagement du nouveau rapport.

4. Procédé selon la revendication 3, **caractérisé en ce que :**
- on accouple l'arbre (10) du moteur thermique (2) avec l'arbre (11) de la machine (4) électrique, tout en réalisant une reprise de couple.

5. Procédé selon l'une des revendications 3 à 4, **caractérisé en ce que :**
- on fait converger le moteur thermique (2), et la machine électrique (4) chacun vers une consigne de couple optimale au regard d'une consommation du moteur thermique (2), après l'accouplement entre l'arbre (10) du moteur thermique (2) et l'arbre (11) de la machine électrique (4).

6. Procédé selon l'une des revendications 2 à 5, **caractérisé en ce que :**
- si une durée qui sépare un ordre antérieur de démarrage du moteur thermique (2) d'un ordre postérieur de changement de rapport est inférieure à une durée (TS) seuil correspondant à une durée nécessaire au moteur thermique (2) pour démarrer et s'accoupler avec la machine électrique (4) alors,
- on autorise le démarrage du moteur thermique (2), mais on inhibe l'accouplement entre l'arbre (10) de ce moteur thermique (2) et l'arbre (11) de la machine électrique (4), tandis que l'engagement du nouveau rapport de vitesse n'a pas été effectué.

7. Procédé selon la revendication 6, **caractérisé en ce que :**
- la durée (TS) seuil est de l'ordre de 350 ms.

8. Procédé selon l'une des revendications 1 à 7, **caractérisé en ce que :**
- une fois que le moteur thermique (2) est démarré, on attend qu'il passe des premières compressions pour être autonome, puis on coupe le système de démarrage (7).

9. Procédé selon l'une des revendications 2 à 8, **caractérisé en ce que :**
- on démarre le moteur thermique (2) avant, pendant, ou après l'annulation du couple (CMEL) observable sur l'arbre (11) de la machine électrique (4).

10. Véhicule automobile apte à la mise en oeuvre du procédé selon l'une des revendications 1 à 9.

## Claims

1. Method of changing the gear ratio of a vehicle employing a power transmission device (1.1) comprising an internal combustion engine (2) and an electric machine (4), this electric machine (4) being connected firstly to the internal combustion engine (2) through a clutch (3) and secondly to an axle shaft (12) with wheels (6) through a gearbox (5), wherein, with the internal combustion engine (2) being off, in order to start the internal combustion engine (2) during a change of gear ratio, and
- while the vehicle is driven by the electric machine (4) alone,
- the internal combustion engine (2) is started by means of a starting system (7) which is connected to this internal combustion engine (2) and which is mechanically independent of the electric machine (4),
**characterized in that:**
- the starting system (7) dissociates the starting of the internal combustion engine (2) from the gear changing of this vehicle, the gear changing appearing before the coupling, via the clutch (3), between the internal combustion engine (2) and the electric machine (4).

2. Method according to Claim 1, **characterized in that:**
- an observable torque (CMEL) on the shaft (11) of the electric machine (4) is cancelled,
- the rotational speed (WMEL) of the electric machine (4) is made to converge towards a target speed (WF) before the new gear ratio is engaged, and
- a new gear ratio is engaged.

3. Method according to Claim 2, **characterized in that:**
- the clutch (3), which was open until then, remains open during the engagement of the new gear ratio, and
- the clutch (3) is closed after this engagement of the new gear ratio.

4. Method according to Claim 3, **characterized in that:**
- the shaft (10) of the internal combustion engine (2) is coupled with the shaft (11) of the electric machine (4), with torque being taken up in the process.

5. Method according to either of Claims 3 and 4, **characterized in that:**
- the internal combustion engine (2) and the electric machine (4) are each made to converge towards an optimum torque setpoint in terms of the fuel consumption of the internal combustion engine (2), after the coupling between the shaft (10) of the internal combustion engine (2) and the shaft (11) of the electric machine (4).

6. Method according to one of Claims 2 to 5, **characterized in that:**
- if a time period separating a prior order to start the internal combustion engine (2) from a subsequent order to change gear ratio is less than a threshold time period (TS) corresponding to a time period required by the internal combustion engine (2) to start and to couple with the electric machine (4), then
- the internal combustion engine (2) is authorized to start, but the coupling between the shaft (10) of this internal combustion engine (2) and the shaft (11) of the electric machine (4) is inhibited for as long as the new gear ratio has not been engaged.

7. Method according to Claim 6, **characterized in that:**
- the threshold time period (TS) is around 350 ms.

8. Method according to one of Claims 1 to 7, **characterized in that:**
- once the internal combustion engine (2) is started, it is left to pass through some initial compression strokes in order to be autonomous, after which the starting system (7) is switched off.

9. Method according to one of Claims 2 to 8, **characterized in that:**
- the internal combustion engine (2) is started before, during or after the observable torque (CMEL) on the shaft (11) of the electric machine (4) is cancelled.

10. Motor vehicle capable of implementing the method according to one of Claims 1 to 9.

## Patentansprüche

1. Verfahren zum Wechseln der Gangstufe eines Fahrzeugs, das eine Vorrichtung (1.1) zur Leistungsübertragung einsetzt, die einen Verbrennungsmotor (2) und eine elektrische Maschine (4) umfasst, wobei diese elektrische Maschine (4) einerseits durch eine Kupplung (3) mit dem Verbrennungsmotor (2) und andererseits durch ein Getriebe (5) mit einer Rad-(6)-Welle (12) verbunden ist, wobei man, wenn sich der Verbrennungsmotor (2) im Stillstand befindet, um den Verbrennungsmotor (2) bei einem Wechsel der Gangstufe anzulassen, und
- während das Fahrzeug allein durch die elektrische Maschine (4) angetrieben wird,
- den Verbrennungsmotor (2) mit Hilfe eines Anlasssystems (7), das mit diesem Verbrennungsmotor (2) verbunden ist und mechanisch unabhängig von der elektrischen Maschine (4) ist, anlässt,
**dadurch gekennzeichnet, dass**
- das Anlasssystem (7) das Anlassen des Verbrennungsmotors (2) von dem Gangwechsel dieses Fahrzeugs trennt, wobei der Gangwechsel vor dem Kuppeln durch die Kupplung (3) zwischen dem Verbrennungsmotor (2) und der elektrischen Maschine (4) erfolgt.

2. Verfahren nach Anspruch 1, **dadurch gekennzeichnet, dass**
- man ein an der Welle (11) der elektrischen Maschine (4) zu beobachtendes Drehmoment (CMEL) außer Kraft setzt,
- man die Drehzahl (WMEL) der elektrischen Maschine (4) vor Einlegen der neuen Gangstufe zu einer Zieldrehzahl (WF) konvergiert, und
- man die neue Gangstufe einlegt.

3. Verfahren nach Anspruch 2, **dadurch gekennzeichnet, dass**
- die Kupplung (3), die bis dahin geöffnet war, während des Einlegens der neuen Gangstufe geöffnet bleibt, und
- die Kupplung (3) nach diesem Einlegen der neuen Gangstufe geschlossen wird.

4. Verfahren nach Anspruch 3, **dadurch gekennzeichnet, dass**
- man die Welle (10) des Verbrennungsmotors (2) mit der Welle (11) der elektrischen Maschine (4) kuppelt, wobei das Drehmoment reaktiviert wird.

5. Verfahren nach einem der Ansprüche 3 bis 4, **dadurch gekennzeichnet, dass**
- man den Verbrennungsmotor (2) und die elektrische Maschine (4) nach der Kupplung zwischen der Welle (10) des Verbrennungsmotors (2) und der Welle (11) der elektrischen Maschine (4) jeweils zu einem optimalen Solldrehmoment hinsichtlich des Verbrauchs des Verbrennungsmotors (2) konvergiert.

6. Verfahren nach einem der Ansprüche 2 bis 5, **dadurch gekennzeichnet, dass**
- falls eine Zeitdauer, die zwischen einem vorherigen Befehl zum Anlassen des Verbrennungsmotors (2) und einem späteren Befehl zum Gangwechsel unter einer Schwellzeitdauer (TS), die einer Dauer entspricht, die für den Verbrennungsmotor (2) erforderlich ist, um zu starten und an die elektrische Maschine (4) anzukuppeln, liegt,
- man das Anlassen des Verbrennungsmotors (2) gestattet, aber das Kuppeln zwischen der Welle (10) dieses Verbrennungsmotors (2) und der Welle (11) der elektrischen Maschine (4) verzögert, solange die neue Gangstufe noch nicht eingelegt ist.

7. Verfahren nach Anspruch 6, **dadurch gekennzeichnet, dass**
- die Schwelldauer (TS) ca. 350 ms beträgt.

8. Verfahren nach einem der Ansprüche 1 bis 7, **dadurch gekennzeichnet, dass**
- man, nachdem der Verbrennungsmotor (2) angelassen ist, abwartet, bis er die ersten Verdichtungen durchlaufen hat, damit er autonom ist, dann das Anlasssystem (7) trennt.

9. Verfahren nach einem der Ansprüche 2 bis 8, **dadurch gekennzeichnet, dass**
- man den Verbrennungsmotor (2) vor, während oder nach der Außerkraftsetzung des an der Welle (11) der elektrischen Maschine (4) zu beobachtenden Drehmoments (CMEL) anlässt.

10. Kraftfahrzeug, bei dem das Verfahren nach einem der Ansprüche 1 bis 9 eingesetzt werden kann.
